# EUROPEAN PATENT APPLICATION

(11) **EP 4 626 069 A1**
(43) Date of publication of application: **01.10.2025**
(21) Application number: 22966136.8
(22) Date of filing: 23.11.2022
(51) Int. Cl.: H04W 28/00

(54) **COMMUNICATION METHOD AND APPARATUS, AND DEVICE AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2022/133817
(87) International publication number: WO 2024/108441

(57) **Abstract**

The embodiments of the present disclosure relate to the technical field of communications. Provided are a communication method and apparatus, and a device and a storage medium, which can be applied to an AP device. The method comprises: determining a first message frame, wherein the first message frame comprises first bandwidth information, the first message frame is used for instructing a first station (STA) device to send a second message frame on the basis of the first bandwidth information, and the second message frame is used for acknowledging an A-PPDU; and sending the first message frame. By means of the embodiments of the present disclosure, an STA device can be instructed on how to send a message frame for acknowledging an A-PPDU.

## Description

### TECHNICAL FIELD

The present disclosure relates to the field of communication technology, in particular, to a communication method, a communication apparatus, an electronic device, and a storage medium.

### BACKGROUND

With the continuous development of Wireless Fidelity (Wi-Fi) technology, researchers have proposed the next generation Wi-Fi technology, which is known as Ultra High Reliability (UHR). The UHR is proposed to expect to improve reliability of WLAN connectivity, as well as reducing latency, enhancing manageability, increasing system throughput, and reducing the power consumption of corresponding devices. In UHR technology, the device communication can be conducted at least in the sub-7GHz frequency band. When high-throughput communication is required, the device communication can be conducted simultaneously in the sub-7GHz frequency band, the 45GHz frequency band, and the 60GHz frequency band.

In UHR technology, the AP device can transmit data frames over high bandwidth using A-PPDU (Aggregate Physical Layer (PHY) Protocol Data Unit). For example, when transmitting data frames over 320MHz bandwidth, the AP device can use 160MHz/80MHz/80MHz bandwidths to transmit PPDUs to different STA devices through the A-PPDU. After receiving the A-PPDU, i.e. the PPDU sent in the A-PPDU to the STA device, the STA device needs to acknowledge the A-PPDU.

In the existing mechanism, the STA device will send a message frame over the bandwidth corresponding to the PPDU sent in the A-PPDU to the STA device to acknowledge the A-PPDU. However, the bandwidth over which the A-PPDU is sent by the AP device and the bandwidth over which the corresponding PPDU is received by the STA device are often inconsistent. In this case, how the STA device acknowledges the A-PPDU has so far proved inconclusive.

### SUMMARY

Embodiments of the present disclosure provide a communication method, a communication apparatus, a device, and a storage medium, which can indicate to the STA device that how to send the message frame configured for acknowledging the A-PPDU.

In a first aspect, embodiments of the present disclosure provide a communication method. The method can be performed by an access point (AP) device, and includes:
determining a first message frame, wherein the first message frame includes first bandwidth information, the first message frame is configured to indicate a first station (STA) device to send a second message frame based on the first bandwidth information, and the second message frame is configured for acknowledging an Aggregate Physical Layer Protocol Data Unit (A-PPDU); and
sending the first message frame.

In a second aspect, embodiments of the present disclosure provide a communication method. The method can be performed by a first STA device, and includes:
receiving a first message frame, wherein the first message frame includes first bandwidth information, the first message frame is configured to indicate the first STA device to send a second message frame based on the first bandwidth information, and the second message frame is configured for acknowledging an A-PPDU.

In a third aspect, embodiments of the present disclosure also provide a communication apparatus, including:
a determination unit configured to determine a first message frame, wherein the first message frame includes first bandwidth information, the first message frame is configured to indicate a first station (STA) device to send a second message frame based on the first bandwidth information, and the second message frame is configured for acknowledging an Aggregate Physical Layer Protocol Data Unit (A-PPDU); and
a first communication unit configured to send the first message frame.

In a fourth aspect, embodiments of the present disclosure also provide a communication apparatus, including:
a second communication unit configured to receive a first message frame, wherein the first message frame includes first bandwidth information, the first message frame is configured to indicate a first STA device to send a second message frame based on the first bandwidth information, and the second message frame is configured for acknowledging an A-PPDU.

In a fifth aspect, embodiments of the present disclosure also provide an AP device including a memory, a processor, and a computer program stored on the memory and executable by the processor. The processor is configured to execute the program, to perform the communication method as provided in the first aspect of the embodiments of the present disclosure.

In a sixth aspect, embodiments of the present disclosure also provide an STA device including a memory, a processor, and a computer program stored on the memory and executable by the processor. The processor is configured to execute the program, to perform the communication method as provided in the second aspect of the embodiments of the present disclosure.

In a seventh aspect, embodiments of the present disclosure also provide a computer-readable storage medium having a computer program stored thereon. When the computer program is executed by a processor, any communication method as provided in the embodiments of the present disclosure is caused to be performed.

Embodiments of the present disclosure provide a communication method, indicating to the STA device that how to send the message frame for acknowledging the A-PPDU.

The additional aspects and advantages of embodiments of the present disclosure will be partially provided in the following description, which will become apparent from the following description or will be understood through practice of the present disclosure.

### BRIEF DESCRIPTION OF THE DRAWINGS

In order to provide a clearer explanation of technical solutions in embodiments of the present disclosure, a brief introduction to the drawings required in the description of embodiments of the present disclosure will be provided in the following. It is apparent that the drawings are only some of the embodiments of the present disclosure, and for those skilled in the art, other drawings can be obtained based on these drawings without creative efforts.
FIG. 1 is a flowchart of a communication method according to embodiments of the present disclosure;
FIG. 2 is a first schematic diagram of a first example according to embodiments of the present disclosure;
FIG. 3 is a second schematic diagram of a first example according to embodiments of the present disclosure;
FIG. 4 is a flowchart of a communication method according to embodiments of the present disclosure;
FIG. 5 is a schematic diagram of a structure of a communication apparatus according to embodiments of the present disclosure;
FIG. 6 is a schematic diagram of a structure of a communication apparatus according to embodiments of the present disclosure; and
FIG. 7 is a schematic diagram of a structure of an electronic device according to embodiments of the present disclosure.

### DETAILED DESCRIPTION

The term "and/or" in embodiments of the present disclosure describes the association relationship between associated objects, indicating that there can be three kinds of relationships. A and/or B, for example, can indicate the presence of A alone, the presence of A and B simultaneously, and the presence of B alone. The character "/" generally indicates that associated objects have an "or" relationship between them.

The term "multiple" in embodiments of the present disclosure refers to two or more, other quantifiers are similar to this.

A detailed explanation of exemplary embodiments will be provided herein, with examples being illustrated in the drawings. The same reference numerals in different drawings represent the same or similar elements when the following description refers to the drawings, unless otherwise indicated. The implementations described in the following exemplary embodiments do not represent all implementations consistent with the present disclosure, instead, they are only examples of devices and methods consistent with some aspects of the present disclosure as detailed in the appended claims.

The terms used in embodiments of the present disclosure are for the purpose of description of specific embodiments only, and are not intended to limit the embodiments of the present disclosure. Singular forms such as "a", "said", and "the" used in embodiments of the present disclosure and the appended claims are also intended to include plural forms, unless other meanings are clearly indicated in the context. It should also be understood that the term "and/or" used in the present disclosure refers to and includes any or all possible combinations of one or more listed items related.

It should be understood that although terms such as first, second, and third may be used to describe various information in embodiments of the present disclosure, such information should not be limited to these terms, which are only used to distinguish information about the same type from each other. For example, without departing from the scope of the present disclosure, the first information can also be referred to as the second information, and similarly, the second information can also be referred to as the first information. The word "if" used herein can be interpreted as "when" or "while" or "in response to determination that", depending on the context.

A clear and complete description of technical solutions disclosed in the embodiments of the present disclosure will be provided in the following, in conjunction with the drawings. Obviously, the embodiments described are only a part of disclosed embodiments of the present disclosure and not all of them. Based on the embodiments of the present disclosure, all other embodiments obtained by those of ordinary skill in the art without creative efforts fall within the protection scope of the present disclosure.

The method and the apparatus are based on the same inventive concept. Due to the similar principles of solving problems by the method and by the apparatus, reference can be made between embodiments of the apparatus and the method, and the same will not be repeated.

In some embodiments, the AP device can be a wireless switch used for wireless networks, which can also be an access device for wireless networks. The AP device can include software applications and/or circuits, to enable other types of nodes in the wireless network to communicate with the outside and inside of the wireless network through the AP device. In some embodiments, the AP device can a terminal device or a network device equipped with Wi-Fi chips.

In some embodiments, the STA device can specifically include, but is not limited to, cellular phones, smart phones, wearable devices, computers, personal digital assistants (PDA), personal communication system (PCS) devices, personal information managers (PIM), personal navigation devices (PND), global positioning systems, multimedia devices, Internet of Things (IoT) devices, etc.

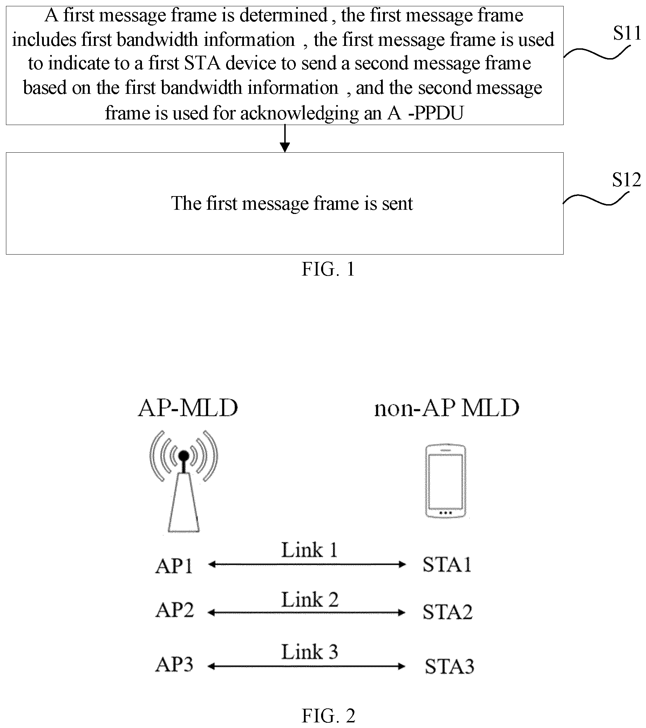

Embodiments of the present disclosure provide a communication method, which can be performed by an AP device. As shown in FIG. 1, which illustrates a flowchart of a communication method provided by embodiments of the present disclosure.

In some embodiments, the method can include following steps S11-S12.

In step S11, a first message frame is determined. The first message frame includes first bandwidth information. The first message frame is used to indicate to a first STA device to send a second message frame based on the first bandwidth information. The second message frame is used for acknowledging an A-PPDU.

In some embodiments, the second message frame is used for acknowledging the A-PPDU sent by the AP device. That is, the second message frame is used to indicate that a PPDU sent to the first STA device from the AP device in the A-PPDU is received.

In some embodiments, the first STA device is any STA device that establishes an initial association link with the AP device.

In some embodiments, the first bandwidth information can be 20MHz.

In step S12, the first message frame is sent.

In some embodiments, the AP device can send the first message frame after sending the A-PPDU to at least one STA device that includes the first STA device.

In some embodiments, the AP device can send the first message frame before sending the A-PPDU to at least one STA device that includes the first STA device.

In the communication method performed by the AP device provided in the present disclosure, a bandwidth indicated in the first bandwidth information is smaller than a channel bandwidth, over which the AP device sends the A-PPDU, indicated in channel bandwidth information.

In some embodiments, the first bandwidth information can be 20MHz, and the channel bandwidth information for the AP device to send the A-PPDU is 320MHz.

In the communication method performed by the AP device provided in the present disclosure, the first message frame further includes an associated identifier of the first STA device.

In some embodiments, the associated identifier (AID) of the first STA device is an identifier assigned to the first STA device by the AP device in a process during which an initial association link between the AP device and the first STA device is established. Different STA devices that establish the initial association links with the same AP device correspond to different AIDs.

The associated identifier of the first STA device in the first message frame is used to indicate that the first bandwidth information is bandwidth information used by the first STA device to send the second message frame.

In the communication method performed by the AP device provided in the present disclosure, when sending the first message frame, the AP device can send the first message frame based on the first bandwidth information.

In some embodiments, the first message frame can be a trigger frame or other message frames that can include the first bandwidth information and/or the associated identifier of the first STA device, which is not limited here.

In some embodiments, the AP device can send the first message frame after sending the A-PPDU.

In the communication method performed by the AP device provided in the present disclosure, the first bandwidth information included in the first message frame is bandwidth information of a first Basic Service Set (BSS) formed by the AP device and the first STA device, or bandwidth information negotiated between the AP device and the first STA device.

In some embodiments, the AP device determines the bandwidth information of the first BSS formed when the AP device establishes the initial association link with the first STA device as the first bandwidth information.

In some embodiments, the AP device negotiates, before sending the A-PPDU, with the first STA device on the bandwidth information for the first STA device to send the second message frame, and determines the negotiated bandwidth information as the first bandwidth information.

In some embodiments, in the wireless local area network, a BSS can be composed of an AP device and one or more station (STA) devices that communicate with the AP device. The BSS can be connected to the Distribution System (DS) through the AP device therein, and then connected to another BSS to form an Extended Service Set (ESS).

In embodiments of the present disclosure, the BSS formed by the AP device and the first STA device is referred to as the first BSS.

In some embodiments, the AP device can be a device with wireless to wired bridging functionality. The AP device is responsible for extending the services provided by the wired network to the wireless network. The STA device can be an electronic device with wireless network access functionality, providing frame delivery services, and thus allowing the information to be transmitted.

In embodiments of the present disclosure, the AP device and the STA device that establishes the initial association link with the AP device can be devices that support the multi-link. In some embodiments, the AP device and the STA device that establishes the initial association link with the AP device can be represented as AP MLD (multi-link device) and Non-AP MLD, respectively.

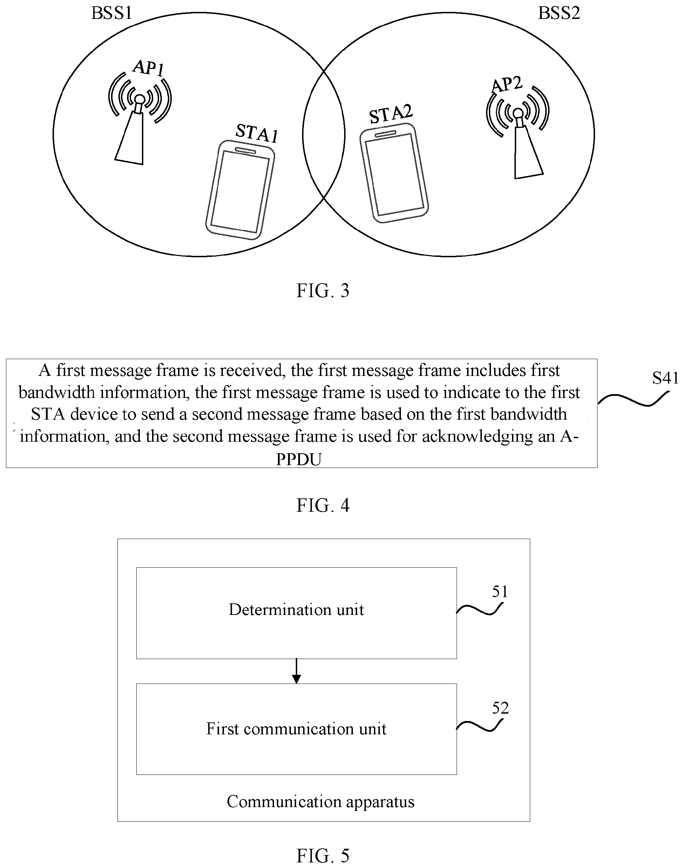

Reference is made to FIGS. 2 and 3, in a first example, the AP MLD can represent an access point device that supports multi-link communication functionality, and the non-AP MLD can represent a station device that supports multi-link communication functionality.

Reference is made to FIG. 2, the AP MLD can include three accessory AP devices, such as AP1, AP2, and AP3 shown in FIG. 2. Each AP device can be operated separately over Link 1, Link 2, and Link 3. The non-AP MLD can also include three accessory STA devices, such as STA1, STA2, and STA3 shown in FIG. 2. STA1 is operated over Link 1, STA2 is operated over Link 2, and STA3 is operated over Link 3. In FIG. 3, AP1 and STA1 form BSS1, and AP2 and STA2 form BSS2. According to FIG. 2, it is assumed that AP1 and STA1 communicate through the corresponding first link Link 1, AP2 and STA2 communicate through the corresponding second link Link 2, and AP3 and STA3 communicate through the corresponding third link Link 3. In addition, Link 1 to Link 3 can be multiple links at different frequencies, for example, links respectively at 2.4GHz, 5GHz, and 6GHz, or several links with the same or different bandwidths at 2.4GHz. In addition, there can be multiple channels over each link. It can be understood that the communication scenario shown in FIG. 2 is only exemplary, and the concept of the present disclosure is not limited to this. For example, the AP MLD can be connected to multiple (three) non-AP MLDs, or for each link, the AP device can communicate with multiple other types of station devices.

In the communication method performed by the AP device provided in the present disclosure, when the AP device supports receiving the second message frame based on the bandwidth information of the first BSS, and the first STA device supports sending the second message frame based on the bandwidth information of the first BSS, the first bandwidth information is the bandwidth information of the first BSS.

In the process of establishing the initial association link with the first STA device, if the AP device determines: that it supports receiving the second message frame based on the bandwidth information of the first BSS, and that the first STA device supports sending the second message frame based on the bandwidth information of the first BSS, the AP device can determine the bandwidth information of the first BSS formed when the initial association link is established between the AP device and the first STA device as the first bandwidth information. In some embodiments, the bandwidth information of the first BSS formed by the AP device and the first STA device is 80MHz. When the AP device supports receiving the second message frame based on the 80MHz bandwidth and the first STA device supports sending the second message frame based on the 80MHz bandwidth, the first bandwidth information can be determined as 80MHz.

In this case, the AP device sends the first message frame to indicate to the first STA device to send the second message frame based on the 80MHz bandwidth.

In the communication method performed by the AP device provided in the present disclosure, when the AP device does not support receiving the second message frame based on the bandwidth information of the first BSS, and/or the first STA device does not support sending the second message frame based on the bandwidth information of the first BSS, the bandwidth information negotiated between the AP device and the first STA device is determined as the first bandwidth information.

In the process of establishing the initial association link with the first STA device, if the AP device determines: that it does not support receiving the second message frame based on the bandwidth information of the first BSS, and/or that the first STA device does not support sending the second message frame based on the bandwidth information of the first BSS, the AP device needs to negotiate with the first STA device to determine the negotiated bandwidth information as the first bandwidth information.

In some embodiments, the AP device can negotiate with the first STA device during the process of establishing the initial association link with the first STA device, or negotiate with the first STA device after the initial association link with the first STA device has been established, which is not limited here.

In some embodiments, when the AP device supports receiving the second message frame based on the bandwidth information of the first BSS, and the first STA device does not support sending the second message frame based on the bandwidth information of the first BSS, the first bandwidth information is the bandwidth information negotiated between the AP device and the first STA device.

In some embodiments, when the AP device does not support receiving the second message frame based on the bandwidth information of the first BSS, and the first STA device does not support sending the second message frame based on the bandwidth information of the first BSS, the first bandwidth information is the bandwidth information negotiated between the AP device and the first STA device.

In some embodiments, when the AP device does not support receiving the second message frame based on the bandwidth information of the first BSS, and the first STA device supports sending the second message frame based on the bandwidth information of the first BSS, the first bandwidth information is the bandwidth information negotiated between the AP device and the first STA device.

In the communication method performed by the AP device provided in the present disclosure, sending a third message frame is further included.

In some embodiments, the third message frame includes a first identification bit. The first identification bit indicates, through a first value, that the AP device supports receiving the second message frame based on the bandwidth information of the first BSS, and indicates, through a second value, that the AP device does not support receiving the second message frame based on the bandwidth information of the first BSS.

In some embodiments, the first identification bit includes at least one bit, the first value can be 1, and the second value can be 0, which is not limited here.

In some embodiments, the bandwidth information of the BSS formed by the AP device and the first STA device is 80MHz. When the identification value of the first identification bit in the third message frame is 1, it indicates that the AP device supports receiving the second message frame based on the 80MHz bandwidth. When the identification value of the first identification bit is 0, it indicates that the AP device does not support receiving the second message frame based on the 80MHz bandwidth.

In some embodiments, the AP device can send the third message frame in the process during which the initial association link between the AP device and the first STA device is established. The third message frame can be a message frame sent in the process during which the initial association link between the AP device and the first STA device is established, for example, the third message frame is an association response frame, etc.

In some embodiments, the AP device can send the third message frame after the initial association link between the AP device and the first STA device is established. The third message frame can be any message frame, such as a trigger frame, etc. If the AP device needs to send an A-PPDU after establishing the initial association link with the first STA device, the AP device sends the third message frame before sending the A-PPDU.

In the communication method performed by the AP device provided in the present disclosure, receiving a fourth message frame is further included.

In some embodiments, the fourth message frame includes a second identification bit. The second identification bit indicates, through a third value, that the first STA device supports sending the second message frame based on the bandwidth information of the first BSS, and indicates, through a fourth value, that the STA device does not support sending the second message frame based on the bandwidth information of the first BSS.

In some embodiments, the second identification bit includes at least one bit, the third value can be 1, and the fourth value can be 0, which is not limited here.

In some embodiments, the bandwidth information of the BSS formed by the AP device and the first STA device is 80MHz. When the identification value of the second identification bit in the fourth message frame is 1, it indicates that the first STA device supports sending the second message frame based on the 80MHz bandwidth. When the identification value of the second identification bit is 0, it indicates that the first STA device does not support sending the second message frame based on the 80MHz bandwidth.

In some embodiments, the AP device can receive the fourth message frame in the process during which the initial association link between the AP device and the first STA device is established. The fourth message frame can be a message frame received in the process during which the initial association link between the AP device and the first STA device is established, for example, the fourth message frame is an association request frame, etc.

In some embodiments, the AP device can receive the fourth message frame after the initial association link between the AP device and the first STA device is established. The fourth message frame can be any message frame. If the AP device needs to send an A-PPDU after establishing the initial association link with the first STA device, the AP device receives the fourth message frame before sending the A-PPDU.

In the communication method performed by the AP device provided in the present disclosure, if the AP device forms multiple BSSs with multiple STA devices, the first bandwidth information can also be second bandwidth information.

In some embodiments, if the AP device forms multiple BSSs with multiple STA devices, the second bandwidth information can be determined based on the bandwidth information of each BSS. If the AP device supports receiving the second message frame based on the second bandwidth information and the first STA device supports sending the second message frame based on the second bandwidth information, the second bandwidth information can be determined as the first bandwidth information.

In some embodiments, a bandwidth indicated in the second bandwidth information is smaller than or equal to the minimum bandwidth in the bandwidth information of each BSS.

In some embodiments, if STA1 and STA2 establish BSSs with the 80MHz bandwidth with the AP, and STA3 establishes the BSS with the 160MHz bandwidth with the AP, then the first bandwidth information can include 80MHz or a smaller bandwidth.

In the communication method performed by the AP device provided in the present disclosure, the method further includes sending a fifth message frame.

In some embodiments, the fifth message frame is used to indicate that the AP device supports sending the A-PPDU, that is, to indicate that the AP device has the capability to send the A-PPDU.

In some embodiments, the fifth message frame can include A-PPDU capability information, which is used to indicate that the AP device supports sending the A-PPDU.

In some embodiments, the AP device can send the fifth message frame in the process during which the initial association link between the AP device and the first STA device is established. The fifth message frame can be a message frame sent in the process during which the initial association link between the AP device and the first STA device is established, for example, the fifth message frame is an association response frame, etc.

In some embodiments, the AP device can send the fifth message frame after the initial association link between the AP device and the first STA device is established. The fifth message frame can be any message frame, such as a trigger frame, etc. If the AP device needs to send an A-PPDU after establishing the initial association link with the first STA device, the AP device sends the fifth message frame before sending the A-PPDU.

In the communication method performed by the AP device provided in the present disclosure, the method further includes receiving a sixth message frame.

In some embodiments, the sixth message frame is used to indicate that the first STA device supports receiving the A-PPDU, that is, to indicate that the first STA device has the capability to receive the A-PPDU.

In some embodiments, the sixth message frame can include A-PPDU capability information, which is used to indicate that the first STA device supports receiving the A-PPDU.

In some embodiments, the AP device can receive the sixth message frame in the process during which the initial association link between the AP device and the first STA device is established. The sixth message frame can be a message frame received in the process during which the initial association link between the AP device and the first STA device is established, for example, the sixth message frame is an association request frame, etc.

In some embodiments, the AP device can receive the sixth message frame after the initial association link between the AP device and the first STA device is established. The sixth message frame can be any message frame. If the AP device needs to send an A-PPDU after establishing the initial association link with the first STA device, the AP device receives the sixth message frame before sending the A-PPDU.

In the communication method performed by the AP device provided in the present disclosure, the AP device can also negotiate, that an acknowledgement mechanism for the A-PPDU is a delayed acknowledgement mechanism, with the first STA device before sending the A-PPDU,.

In some embodiments, the AP device can send a seventh message frame to the first STA device. The seventh message frame indicates, through first indication information, that the acknowledgement mechanism for the A-PPDU is a delayed acknowledgement mechanism, so that the first STA device can send the second message frame based on the delayed acknowledgement mechanism.

In some embodiments, the AP device can send the seventh message frame to the first STA device. The seventh message frame indicates, through the first indication information, that the acknowledgement mechanism for the A-PPDU is a delayed acknowledgement mechanism. The AP device receives an eighth message frame sent by the first STA device, and the eighth message frame is used to confirm that the second message frame is sent based on the delayed acknowledgement mechanism.

In some embodiments, the AP device can receive a ninth message frame sent by the first STA device. The ninth message frame indicates, through second indication information, that the A-PPDU acknowledgement mechanism supported by the first STA device is a delayed acknowledgement mechanism, which is used to indicate that the first STA device sends the second message frame based on the delayed acknowledgement mechanism.

In some embodiments, the AP device can receive the ninth message frame sent by the first STA device. The ninth message frame indicates, through the second indication information, that the A-PPDU acknowledgement mechanism supported by the first STA device is a delayed acknowledgement mechanism. The AP device sends a tenth message frame to the first STA device, and the tenth message frame is used to confirm that the first STA device sends the second message frame based on the delayed acknowledgement mechanism.

In some embodiments, the AP device can negotiate, that the acknowledgement mechanism for the A-PPDU is a delayed acknowledgement mechanism, with the first STA device in the process during which the initial association link between the AP device and the first STA device is established.

In some embodiments, the AP device can negotiate, that the acknowledgement mechanism for the A-PPDU is a delayed acknowledgement mechanism, with the first STA device after the initial association link between the AP device and the first STA device is established. If the AP device needs to send an A-PPDU after establishing the initial association link with the first STA device, the AP device negotiates, that the acknowledgement mechanism for the A-PPDU is a delayed acknowledgement mechanism, with the first STA device before sending the A-PPDU.

In the communication method performed by the AP device provided in the present disclosure, the second message frame is an acknowledgement (ACK) frame or a block acknowledgement (BA) frame.

In the communication method performed by the AP device provided in the present disclosure, the method further includes receiving a second message frame.

In some embodiments, the AP device can receive the second message frame based on the first bandwidth information.

In some embodiments, the second message frame is sent by the first STA device based on a radio unit (RU) corresponding to the associated identifier of the first STA device in view of the first bandwidth information.

Embodiments of the present disclosure provide a communication method, which can be performed by a first STA device. As shown in FIG. 4, which illustrates a flowchart of a communication method provided by embodiments of the present disclosure.

In some embodiments, the method can include following step S41.

In step S41, a first message frame is received. The first message frame includes first bandwidth information. The first message frame is used to indicate to the first STA device to send a second message frame based on the first bandwidth information. The second message frame is used for acknowledging an A-PPDU.

In some embodiments, the second message frame is used for acknowledging the A-PPDU sent by the AP device. That is, the second message frame is used to indicate that a PPDU sent to the first STA device by the AP device in the A-PPDU is received.

In some embodiments, the first STA device is any STA device that establishes an initial association link with the AP device.

In some embodiments, the first STA device can receive the first message frame after the AP device sends the A-PPDU to at least one STA device that includes the first STA device.

In some embodiments, the first STA device can receive the first message frame before the AP device sends the A-PPDU to at least one STA device that includes the first STA device.

In some embodiments, the first bandwidth information can be 20MHz.

In the communication method performed by the first STA device provided in the present disclosure, a bandwidth indicated in the first bandwidth information is smaller than a channel bandwidth over which the AP device sends the A-PPDU indicated in channel bandwidth information.

In some embodiments, the first bandwidth information can be 20MHz, and the channel bandwidth information for the AP device to send the A-PPDU is 320MHz.

In the communication method performed by the first STA device provided in the present disclosure, the first message frame further includes an associated identifier of the first STA device.

In some embodiments, the associated identifier (AID) of the first STA device is an identifier assigned to the first STA device by the AP device in a process during which an initial association link between the AP device and the first STA device is established. Different STA devices that establish the initial association links with the same AP device correspond to different AIDs.

The associated identifier of the first STA device in the first message frame is used to indicate that the first bandwidth information is bandwidth information used by the first STA device to send the second message frame.

In the communication method performed by the first STA device provided in the present disclosure, the method further includes sending a second message frame based on the first bandwidth information.

After receiving the A-PPDU sent by the AP device, that is, after receiving the PPDU sent to the first STA device by the AP device in the A-PPDU, the first STA device sends the second message frame based on the first bandwidth information.

In some embodiments, the second message frame is sent by the first STA device based on a radio unit (RU) corresponding to the associated identifier of the first STA device in view of the first bandwidth information.

In the communication method performed by the first STA device provided in the present disclosure, when receiving the first message frame, the first STA device can receive the first message frame based on the first bandwidth information.

In some embodiments, the first message frame can be a trigger frame or other message frames that can include the first bandwidth information and/or the associated identifier of the first STA device, which is not limited here.

In some embodiments, the first STA device can receive the first message frame sent by the AP device after the AP device sends the A-PPDU.

In the communication method performed by the first STA device provided in the present disclosure, the first bandwidth information included in the first message frame is bandwidth information of a first Basic Service Set (BSS) formed by the AP device and the first STA device, or bandwidth information negotiated between the AP device and the first STA device.

In some embodiments, when the first STA device establishes the initial association link with the AP device, the AP device determines the bandwidth information of the formed first BSS as the first bandwidth information.

In some embodiments, before receiving the A-PPDU sent by the AP device, the first STA device negotiates with the AP device on the bandwidth information for the first STA device to send the second message frame, and determines the negotiated bandwidth information as the first bandwidth information.

In the communication method performed by the first STA device provided in the present disclosure, when the AP device supports receiving the second message frame based on the bandwidth information of the first BSS, and the first STA device supports sending the second message frame based on the bandwidth information of the first BSS, the first bandwidth information is the bandwidth information of the first BSS.

In the process of establishing the initial association link with the AP device, if the AP device supports receiving the second message frame based on the bandwidth information of the first BSS and the first STA device supports sending the second message frame based on the bandwidth information of the first BSS, the AP device determines the bandwidth information of the first BSS formed when the initial association link is established between the AP device and the first STA device as the first bandwidth information. In some embodiments, the bandwidth information of the first BSS formed by the AP device and the first STA device is 80MHz. When the AP device supports receiving the second message frame based on the 80MHz bandwidth and the first STA device supports sending the second message frame based on the 80MHz bandwidth, the first bandwidth information is 80MHz.

In this case, the first STA device can send the second message frame based on the 80MHz bandwidth after receiving the A-PPDU sent by the AP device, that is, after receiving the PPDU sent to the first STA device in the A-PPDU.

In the communication method performed by the first STA device provided in the present disclosure, when the AP device does not support receiving the second message frame based on the bandwidth information of the first BSS, and/or the first STA device does not support sending the second message frame based on the bandwidth information of the first BSS, the first bandwidth information is the bandwidth information negotiated between the AP device and the first STA device.

In the process of establishing the initial association link with the AP device, if the AP device does not support receiving the second message frame based on the bandwidth information of the first BSS, and/or the first STA device does not support sending the second message frame based on the bandwidth information of the first BSS, the first STA device needs to negotiate with the AP device, so that the negotiated bandwidth information can be determined as the first bandwidth information.

In some embodiments, the first STA device can negotiate with the AP device during the process of establishing the initial association link with the AP device, or negotiate with the AP device after the initial association link with the AP device has been established, which is not limited here.

In some embodiments, when the AP device supports receiving the second message frame based on the bandwidth information of the first BSS, and the first STA device does not support sending the second message frame based on the bandwidth information of the first BSS, the first bandwidth information is the bandwidth information negotiated between the AP device and the first STA device.

In some embodiments, when the AP device does not support receiving the second message frame based on the bandwidth information of the first BSS, and the first STA device does not support sending the second message frame based on the bandwidth information of the first BSS, the first bandwidth information is the bandwidth information negotiated between the AP device and the first STA device.

In some embodiments, when the AP device does not support receiving the second message frame based on the bandwidth information of the first BSS, and the first STA device supports sending the second message frame based on the bandwidth information of the first BSS, the first bandwidth information is the bandwidth information negotiated between the AP device and the first STA device.

In the communication method performed by the first STA device provided in the present disclosure, the method further includes receiving a third message frame.

In some embodiments, the third message frame includes a first identification bit. The first identification bit indicates, through a first value, that the AP device supports receiving the second message frame based on the bandwidth information of the first BSS, and indicates, through a second value, that the AP device does not support receiving the second message frame based on the bandwidth information of the first BSS.

In some embodiments, the first identification bit includes at least one bit, the first value can be 1, and the second value can be 0, which is not limited here.

In some embodiments, the bandwidth information of the BSS formed by the AP device and the first STA device is 80MHz. When the identification value of the first identification bit in the third message frame is 1, it indicates that the AP device supports receiving the second message frame based on the 80MHz bandwidth. When the identification value of the first identification bit is 0, it indicates that the AP device does not support receiving the second message frame based on the 80MHz bandwidth.

In some embodiments, the AP device can send a third message frame in the process during which the initial association link between the AP device and the first STA device is established. The third message frame can be a message frame sent in the process during which the initial association link between the AP device and the first STA device is established, for example, the third message frame is an association response frame, etc. The first STA device can receive the third message frame in the process during which the initial association link between the AP device and the first STA device is established.

In some embodiments, the AP device can send a third message frame after the initial association link between the AP device and the first STA device is established. The third message frame can be any message frame, such as a trigger frame, etc. After establishing the initial association link with the AP device, the first STA device can receive the third message frame before the AP device sends the A-PPDU.

In the communication method performed by the first STA device provided in the present disclosure, the method further includes sending a fourth message frame.

In some embodiments, the fourth message frame includes a second identification bit, the second identification bit indicates, through a third value, that the first STA device supports sending the second message frame based on the bandwidth information of the first BSS, and indicates, through a fourth value, that the STA device does not support sending the second message frame based on the bandwidth information of the first BSS.

In some embodiments, the second identification bit includes at least one bit, the third value can be 1, and the fourth value can be 0, which is not limited here.

In some embodiments, the bandwidth information of the BSS formed by the AP device and the first STA device is 80MHz. When the identification value of the second identification bit in the fourth message frame is 1, it indicates that the first STA device supports sending the second message frame based on the 80MHz bandwidth. When the identification value of the second identification bit is 0, it indicates that the first STA device does not support sending the second message frame based on the 80MHz bandwidth.

In some embodiments, the first STA device can send the fourth message frame in the process during which the initial association link between the first STA device and the AP device is established. The fourth message frame can be a message frame sent in the process during which the initial association link between the first STA device and the AP device is established, for example, the fourth message frame is an association request frame, etc.

In some embodiments, the first STA device can send the fourth message frame after the initial association link between the first STA device and the AP device is established. The fourth message frame can be any message frame. After establishing the initial association link with the AP device, the first STA device sends the fourth message frame before the AP device sends the A-PPDU.

In the communication method performed by the first STA device provided in the present disclosure, if the AP device forms multiple BSSs with multiple STA devices, the first bandwidth information can also be the second bandwidth information.

In some embodiments, if the AP device forms multiple BSSs with multiple STA devices, and in the case where the AP device supports receiving the second message frame based on the second bandwidth information, and the first STA device supports sending the second message frame based on the second bandwidth information, the second bandwidth information is determined as the first bandwidth information.

In some embodiments, a bandwidth indicated in the second bandwidth information is smaller than or equal to the minimum bandwidth in the bandwidth information of each BSS.

In some embodiments, if STA1 and STA2 establish BSSs with the 80MHz bandwidth with the AP, and STA3 establishes the BSS with the 160MHz bandwidth with the AP, then the first bandwidth information can be 80MHz or a smaller bandwidth.

In the communication method performed by the first STA device provided in the present disclosure, the method further includes receiving a fifth message frame.

In some embodiments, the fifth message frame is used to indicate that the AP device supports sending the A-PPDU, that is, to indicate that the AP device has the capability to send the A-PPDU.

In some embodiments, the fifth message frame can include A-PPDU capability information, which is used to indicate that the AP device supports sending the A-PPDU.

In some embodiments, the AP device can send a fifth message frame in the process during which the initial association link between the AP device and the first STA device is established. The fifth message frame can be a message frame sent in the process during which the initial association link between the AP device and the first STA device is established, for example, the fifth message frame is an association response frame, etc. The first STA device can receive the fifth message frame in the process during which the initial association link between the first STA device and the AP device is established.

In some embodiments, the AP device can send a fifth message frame after the initial association link between the AP device and the first STA device is established. The fifth message frame can be any message frame, such as a trigger frame, etc. If the AP device needs to send an A-PPDU after establishing the initial association link with the first STA device, the AP device sends the fifth message frame before sending the A-PPDU. After establishing the initial association link with the AP device, the first STA device can receive the fifth message frame sent by the AP device before sending the A-PPDU.

In the communication method performed by the first STA device provided in the present disclosure, the method further includes sending a sixth message frame.

In some embodiments, the sixth message frame is used to indicate that the first STA device supports receiving the A-PPDU, that is, to indicate that the first STA device has the capability to receive the A-PPDU.

In some embodiments, the sixth message frame can include A-PPDU capability information, which is used to indicate that the first STA device supports receiving the A-PPDU.

In some embodiments, the first STA device can send the sixth message frame in the process during which the initial association link between the first STA device and the AP device is established. The sixth message frame can be a message frame sent in the process during which the initial association link between the first STA device and the AP device is established, for example, the sixth message frame is an association request frame, etc.

In some embodiments, the first STA device can send the sixth message frame after the initial association link between the first STA device and the AP device is established. The sixth message frame can be any message frame. After establishing the initial association link with the AP device, the first STA device sends the sixth message frame before the AP device sends the A-PPDU.

In the communication method performed by the first STA device provided in the present disclosure, the first STA device can also negotiate, that an acknowledgement mechanism for the A-PPDU is a delayed acknowledgement mechanism, with the AP device before the AP device sends the A-PPDU.

In some embodiments, the first STA device can receive a seventh message frame sent by the AP device. The seventh message frame indicates, through first indication information, that the acknowledgement mechanism for the A-PPDU is a delayed acknowledgement mechanism, so that the first STA device can send the second message frame based on the delayed acknowledgement mechanism.

In some embodiments, the first STA device can receive the seventh message frame sent by the AP device. The seventh message frame indicates, through the first indication information, that the acknowledgement mechanism for the A-PPDU is a delayed acknowledgement mechanism. The first STA device sends an eighth message frame to the AP device, and the eighth message frame is used to confirm that the second message frame is sent based on the delayed acknowledgement mechanism.

In some embodiments, the first STA device can send a ninth message frame to the AP device. The ninth message frame indicates, through the second indication information, that the A-PPDU acknowledgement mechanism supported by the first STA device is a delayed acknowledgement mechanism, which is used to indicate that the first STA device sends the second message frame based on the delayed acknowledgement mechanism.

In some embodiments, the first STA device can send a ninth message frame to the AP device. The ninth message frame indicates, through the second indication information, that the A-PPDU acknowledgement mechanism supported by the first STA device is a delayed acknowledgement mechanism. The first STA device receives a tenth message frame sent by the AP device, and the tenth message frame is used to confirm that the first STA device sends the second message frame based on the delayed acknowledgement mechanism.

In some embodiments, the first STA device can negotiate, that the acknowledgement mechanism for the A-PPDU is a delayed acknowledgement mechanism, with the AP device in the process during which the initial association link between the first STA device and the AP device is established.

In some embodiments, the first STA device can negotiate, that the acknowledgement mechanism for the A-PPDU is a delayed acknowledgement mechanism, with the AP device after the initial association link between the first STA device and the AP device is established. After establishing the initial association link with the AP device, the first STA device negotiates, that the acknowledgement mechanism for the A-PPDU is a delayed acknowledgement mechanism, with the AP device before the AP device sends the A-PPDU.

In the communication method performed by the first STA device provided in the present disclosure, the second message frame is an acknowledgement (ACK) frame or a block acknowledgement (BA) frame.

In embodiments of the present disclosure, the AP device can send the first message frame including the first bandwidth information, to indicate to the first STA device to send the second message frame based on the first bandwidth information, and the second message frame is used for acknowledging the A-PPDU after receiving the A-PPDU.

As shown in FIG. 5, embodiments of the present disclosure provide a communication apparatus. The communication apparatus includes a determination unit 51 and a first communication unit 52.

The determination unit 51 is configured to determine a first message frame, which includes first bandwidth information, the first message frame is configured to indicate to a first station (STA) device to send a second message frame based on the first bandwidth information, and the second message frame is configured for acknowledging an Aggregate Physical Layer Protocol Data Unit (A-PPDU).

The first communication unit 52 is configured to send the above first message frame.

In some embodiments of the present disclosure, the first bandwidth information is the bandwidth information of the first Basic Service Set (BSS) formed with the first STA device, or the bandwidth information negotiated with the first STA device.

In some embodiments of the present disclosure, in the case that the AP device supports receiving the second message frame based on the bandwidth information of the first BSS, and the first STA device supports sending the second message frame based on the bandwidth information of the first BSS, the bandwidth information of the first BSS is determined as the first bandwidth information.

In some embodiments of the present disclosure, in the case that the AP device does not support receiving the second message frame based on the bandwidth information of the first BSS, and/or the first STA device does not support sending the second message frame based on the bandwidth information of the first BSS, the bandwidth information negotiated between the AP device and the first STA device is determined as the first bandwidth information.

In some embodiments of the present disclosure, the first communication unit 52 mentioned above is further configured to:

send a third message frame, which includes a first identification bit, and the first identification bit is configured to indicate, through a first value, that the AP device supports receiving the second message frame based on the bandwidth information of the first BSS, and to indicate, through a second value, that the AP device does not support receiving the second message frame based on the bandwidth information of the first BSS;

receive a fourth message frame, which includes a second identification bit, and the second identification bit is configured to indicate, through a third value, that the first STA device supports sending the second message frame based on the bandwidth information of the first BSS, and to indicate, through a fourth value, that the first STA device supports sending the second message frame based on the bandwidth information of the first BSS.

In some embodiments of the present disclosure, the first communication unit 52 mentioned above is further configured to:
send a fifth message frame, which is configured to indicate that the AP device supports sending the A-PPDU;
receive a sixth message frame, which is configured to indicate that the first STA device supports receiving the A-PPDU.

In some embodiments of the present disclosure, the first communication unit 52 mentioned above is further configured to:
negotiate with the first STA device before sending the A-PPDU that an acknowledgement mechanism for the A-PPDU is a delayed acknowledgement mechanism.

In some embodiments of the present disclosure, the first communication unit 52 mentioned above is further configured to:
send the first message frame based on the first bandwidth information mentioned above.

In some embodiments of the present disclosure, the first message frame mentioned above is a trigger (TF) frame.

In some embodiments of the present disclosure, the second message frame mentioned above is an acknowledgement (ACK) frame or a block acknowledgement (BA) frame.

In some embodiments of the present disclosure, the first message frame further includes an associated identifier corresponding to the first STA device.

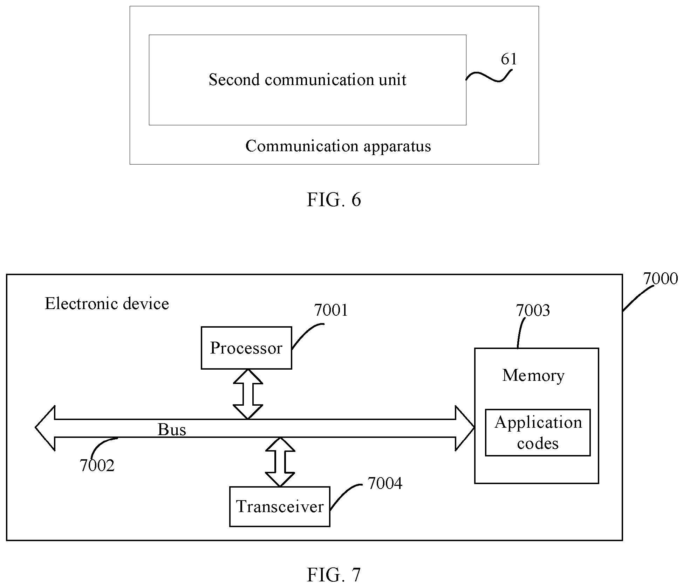

As shown in FIG. 6, embodiments of the present disclosure provide a communication apparatus. The communication apparatus includes a second communication unit 61.

The second communication unit 61 is configured to receive a first message frame, which includes first bandwidth information, the first message frame is configured to indicate to the first STA device to send a second message frame based on the first bandwidth information, and the second message frame is configured for acknowledging an A-PPDU.

In some embodiments of the present disclosure, the second communication unit 61 mentioned above is further configured to:
send the second message frame based on the first bandwidth information mentioned above.

In some embodiments of the present disclosure, the first bandwidth information mentioned above is the bandwidth information of the first BSS formed with the AP device, or the bandwidth information negotiated with the above AP device.

In some embodiments of the present disclosure, in the case that the AP device supports receiving the second message frame based on the bandwidth information of the first BSS, and the first STA device supports sending the second message frame based on the bandwidth information of the first BSS, the bandwidth information of the first BSS is determined as the first bandwidth information.

In some embodiments of the present disclosure, in the case that the AP device does not support receiving the second message frame based on the bandwidth information of the first BSS, and/or the first STA device does not support sending the second message frame based on the bandwidth information of the first BSS, the bandwidth information negotiated between the AP device and the first STA device is determined as the first bandwidth information.

In some embodiments of the present disclosure, the second communication unit 61 mentioned above is further configured to:
receive a third message frame, which includes a first identification bit, and the first identification bit is configured to indicate, through a first value, that the AP device supports receiving the second message frame based on the bandwidth information of the first BSS, and to indicate, through a second value, that the AP device does not support receiving the second message frame based on the bandwidth information of the first BSS;
send a fourth message frame, which includes a second identification bit, and the second identification bit is configured to indicate, through a third value, that the first STA device supports sending the second message frame based on the bandwidth information of the first BSS, and to indicate, through a fourth value, that the first STA device supports sending the second message frame based on the bandwidth information of the first BSS.

In some embodiments of the present disclosure, the second communication unit 61 mentioned above is further configured to:
receive a fifth message frame, which is configured to indicate that an AP device supports sending the A-PPDU;
send a sixth message frame, which is configured to indicate that the first STA device supports receiving the A-PPDU.

In some embodiments of the present disclosure, the second communication unit 61 mentioned above is further configured to:
negotiate with an AP device before receiving the A-PPDU that an acknowledgement mechanism for the A-PPDU is a delayed acknowledgement mechanism.

In some embodiments of the present disclosure, the second communication unit 61 mentioned above is further configured to:
receive the first message frame based on the first bandwidth information mentioned above.

In some embodiments of the present disclosure, the first message frame mentioned above is a trigger (TF) frame.

In some embodiments of the present disclosure, the second message frame mentioned above is an acknowledgement (ACK) frame or a block acknowledgement (BA) frame.

In some embodiments of the present disclosure, the first message frame further includes an associated identifier corresponding to the first STA device.

Embodiments of the present disclosure also provide an electronic device, as shown in FIG. 7. The electronic device 7000 shown in FIG. 7 includes a processor 7001 and a memory 7003. In some embodiments, the processor 7001 is connected to the memory 7003, such as through a bus 7002. In some embodiments, the electronic device 7000 can also include a transceiver 7004. It should be noted that in practical applications, the transceiver 7004 is not limited to one transceiver, and the structure of the electronic device 7000 does not constitute a limitation on the embodiments of the present disclosure.

The memory 7003 is used to store the application program codes for executing the embodiments of the present disclosure, and is controlled for execution by the processor 7001. When the electronic device 7000 serves as an AP device, the processor 7001 is used to execute the application program codes stored in the memory 7003 to implement the communication method applicable to the AP device in the present disclosure. When the electronic device 7000 serves as a first STA device, the processor 7001 is used to execute the application program codes stored in the memory 7003 to implement the communication method applicable to the first STA device in the present disclosure.

The bus 7002 can include a pathway for transmitting information between the above components. The bus 7002 can be a PCI (Peripheral Component Interconnect) bus or an EISA (Extended Industry Standard Architecture) bus, etc. The bus 7002 can be divided into an address bus, a data bus, a control bus, etc. For ease of representation, only one thick line is used in FIG. 7, but it does not indicate that there is only one bus or one type of bus.

The memory 7003 can be a read-only memory (ROM) or other types of static storage devices that can store static information and instructions, a random access memory (RAM) or other types of dynamic storage devices that can store information and instructions, or an electrically erasable programmable read-only memory (EEPROM) or a compact disc read only memory (CD-ROM), or other optical disk storages, optical disc storages (including compressed optical discs, laser discs, optical discs, digital versatile discs, blue ray discs, etc.), magnetic disc storage media or other magnetic storage devices, or any other media that can be used to carry or store expected program codes in the form of instructions or data structures and can be accessed by a computer, but not limited to these.

Embodiments of the present disclosure provide a computer-readable storage medium on which a computer program is stored. When the computer program is running on a computer, enables the computer to implement the corresponding content of the aforementioned method embodiments.

It should be understood that although the various steps in the flowchart in the drawings are displayed in sequence indicated by arrows, these steps are not necessarily executed in the order indicated by the arrows. Unless explicitly stated in the article, the execution of these steps does not have strict order restrictions and can be carried out in other orders. Moreover, at least a portion of the steps in the flowchart of the drawings can include multiple sub steps or stages, which may not necessarily be completed at the same time, but may be executed at different times, and their execution order may not necessarily be in sequence, but may rotate or alternate with at least a portion of other steps or sub steps or stages.

It should be noted that the computer-readable medium mentioned in the present disclosure can be a computer-readable signal medium, a computer-readable storage medium, or any combination of the two. The computer-readable storage medium can be, but is not limited to, an electrical, magnetic, optical, electromagnetic, infrared, or semiconductor system, apparatus, or device, or any combination thereof. More specific examples of the computer-readable storage medium can include, but are not limited to: electrical links with one or more wires, portable computer disks, hard drives, random access memory (RAM), read-only memory (ROM), erasable programmable read-only memory (EPROM or flash), fiber optics, portable compact disk read-only memory (CD-ROM), optical storage devices, magnetic storage devices, or any suitable combination of the above. In the present disclosure, a computer-readable storage medium can be any tangible medium containing or storing a program, which can be used by an instruction execution system, apparatus, or device, or in combination with it. In the present disclosure, the computer-readable signal medium can include data signals propagated in the baseband or as part of the carrier wave, which carry computer-readable program codes. This type of transmitted data signal can take various forms, including but not limited to electromagnetic signals, optical signals, or any suitable combination of the above. The computer-readable signal medium can also be any computer-readable storage medium other than a computer-readable storage medium, which can send, propagate, or transmit programs for use by an instruction execution system, apparatus, or device, or in combination with it. The program code contained on computer-readable medium can be transmitted using any appropriate medium, including but not limited to: wires, optical cables, RF (radio frequency), etc., or any suitable combination of the above.

The above-mentioned computer-readable medium can be included in the AP device or the first STA device mentioned above, which can also exist separately without being assembled into the AP device or the first STA device.

The above-mentioned computer-readable medium carries one or more programs, which when executed by the AP device or the first STA device, cause the AP device or the first STA device to perform the communication methods shown in the above embodiments.

According to one aspect of the present disclosure, a computer program product or computer program is provided, including computer instructions stored in a computer-readable storage medium. The processor of a computer device reads the computer instructions from the computer-readable storage medium, executes the computer instructions, and causes the computer device to implement the communication methods provided in various embodiments mentioned above.

The computer program codes for implementing the operations disclosed herein can be written in one or more programming languages or combinations thereof, including object-oriented programming languages such as Java, Smalltalk, C++, and conventional procedural programming languages such as C or similar programming languages. The program codes can be completely executed on the user's computer, partially executed on the user's computer, executed as an independent software package, partially executed on the user's computer and partially executed on a remote computer, or completely executed on the remote computer or a server. In the case where remote computers are involved, the remote computer can be connected to the user computer through any type of networks, including local area networks (LAN) or wide area networks (WAN), or can be connected to an external computer (such as connected via the internet provided by internet service providers).

The flowchart and block diagram in the drawings illustrate the possible architectures, functions, and operations of the systems, methods, and computer program products according to various embodiments of the present disclosure. Each box in a flowchart or block diagram can represent a module, a program segment, or a part of codes that contain one or more executable instructions for implementing a specified logical function. It should also be noted that in some embodiments, the functions indicated in the box can also occur in a different order than those indicated in the drawings. For example, two consecutive boxes can actually be executed in basic parallel order, and sometimes they can also be executed in opposite order, depending on the functionality involved. It should also be noted that each box in the block diagram and/or flowchart, as well as the combination of boxes in the block diagram and/or flowchart, can be implemented using dedicated hardware based systems that perform specified functions or operations, or can be implemented using a combination of dedicated hardware and computer instructions.

The modules described in embodiments of the present disclosure can be implemented through software or hardware. In some embodiments, the name of the module does not constitute a limitation on the module itself in a certain situation. For example, module A can also be described as "module A used to perform operation B".

The above description is only for embodiments of the present disclosure and an explanation of the technical principles involved. Those skilled in the art should understand that the scope of the present disclosure is not limited to technical solutions formed by specific combinations of the technical features mentioned above, and should also cover other technical solutions formed by arbitrary combinations of the technical features mentioned above or their equivalent features without departing from the concept disclosed. For example, a technical solution formed by replacing the above features with technical features with similar functions disclosed (but not limited to) in the present disclosure.

## Claims

1. A communication method, performed by an access point (AP) device, the method comprising:
determining a first message frame, wherein the first message frame comprises first bandwidth information, the first message frame is configured to indicate a first station (STA) device to send a second message frame based on the first bandwidth information, and the second message frame is configured for acknowledging an Aggregate Physical Layer Protocol Data Unit (A-PPDU); and
sending the first message frame.

2. The method according to claim 1, wherein the first bandwidth information is bandwidth information of a first Basic Service Set (BSS) formed with the first STA device, or bandwidth information negotiated with the first STA device.

3. The method according to claim 2, wherein in the case that the AP device supports receiving the second message frame based on the bandwidth information of the first BSS, and the first STA device supports sending the second message frame based on the bandwidth information of the first BSS, the bandwidth information of the first BSS is determined as the first bandwidth information.

4. The method according to claim 2, wherein in the case that the AP device does not support receiving the second message frame based on the bandwidth information of the first BSS, and/or the first STA device does not support sending the second message frame based on the bandwidth information of the first BSS, the bandwidth information negotiated between the AP device and the first STA device is determined as the first bandwidth information.

5. The method according to claim 3 or 4, further comprising at least one of:
sending a third message frame, wherein the third message frame comprises a first identification bit, and the first identification bit is configured to indicate, through a first value, that the AP device supports receiving the second message frame based on the bandwidth information of the first BSS, and to indicate, through a second value, that the AP device does not support receiving the second message frame based on the bandwidth information of the first BSS; or
receiving a fourth message frame, wherein the fourth message frame comprises a second identification bit, and the second identification bit is configured to indicate, through a third value, that the first STA device supports sending the second message frame based on the bandwidth information of the first BSS, and to indicate, through a fourth value, that the first STA device supports sending the second message frame based on the bandwidth information of the first BSS.

6. The method according to claim 1, further comprising at least one of:
sending a fifth message frame, wherein the fifth message frame is configured to indicate that the AP device supports sending the A-PPDU; or
receiving a sixth message frame, wherein the sixth message frame is configured to indicate that the first STA device supports receiving the A-PPDU.

7. The method according to claim 1, further comprising:
negotiating with the first STA device before sending the A-PPDU that an acknowledgement mechanism for the A-PPDU is a delayed acknowledgement mechanism.

8. The method according to claim 2, wherein sending the first message frame comprises:
sending the first message frame based on the first bandwidth information.

9. The method according to claim 1, wherein the first message frame is a trigger (TF) frame.

10. The method according to claim 1, wherein the second message frame is an acknowledgement (ACK) frame or a block acknowledgement (BA) frame.

11. The method according to claim 1, wherein the first message frame further comprises an associated identifier corresponding to the first STA device.

12. A communication method, performed by a first station (STA) device, the method comprising:
receiving a first message frame, wherein the first message frame comprises first bandwidth information, the first message frame is configured to indicate the first STA device to send a second message frame based on the first bandwidth information, and the second message frame is configured for acknowledging an A-PPDU.

13. The method according to claim 12, further comprising:
sending the second message frame based on the first bandwidth information.

14. The method according to claim 12, wherein the first bandwidth information is bandwidth information of a first BSS formed with an AP device, or bandwidth information negotiated with the AP device.

15. The method according to claim 14, wherein in the case that the AP device supports receiving the second message frame based on the bandwidth information of the first BSS, and the first STA device supports sending the second message frame based on the bandwidth information of the first BSS, the bandwidth information of the first BSS is determined as the first bandwidth information.

16. The method according to claim 14, wherein in the case that the AP device does not support receiving the second message frame based on the bandwidth information of the first BSS, and/or the first STA device does not support sending the second message frame based on the bandwidth information of the first BSS, the bandwidth information negotiated between the AP device and the first STA device is determined as the first bandwidth information.

17. The method according to claim 15 or 16, further comprising at least one of:
receiving a third message frame, wherein the third message frame comprises a first identification bit, and the first identification bit is configured to indicate, through a first value, that the AP device supports receiving the second message frame based on the bandwidth information of the first BSS, and to indicate, through a second value, that the AP device does not support receiving the second message frame based on the bandwidth information of the first BSS; or
sending a fourth message frame, wherein the fourth message frame comprises a second identification bit, and the second identification bit is configured to indicate, through a third value, that the first STA device supports sending the second message frame based on the bandwidth information of the first BSS, and to indicate, through a fourth value, that the first STA device supports sending the second message frame based on the bandwidth information of the first BSS.

18. The method according to claim 12, further comprising at least one of:
receiving a fifth message frame, wherein the fifth message frame is configured to indicate that an AP device supports sending the A-PPDU; or
sending a sixth message frame, wherein the sixth message frame is configured to indicate that the first STA device supports receiving the A-PPDU.

19. The method according to claim 12, further comprising:
negotiating with an AP device before receiving the A-PPDU that an acknowledgement mechanism for the A-PPDU is a delayed acknowledgement mechanism.

20. The method according to claim 12, wherein receiving the first message frame comprises:
receiving the first message frame based on the first bandwidth information.

21. The method according to claim 12, wherein the first message frame is a trigger (TF) frame.

22. The method according to claim 12, wherein the second message frame is an acknowledgement (ACK) frame or a block acknowledgement (BA) frame.

23. The method according to claim 12, wherein the first message frame further comprises an associated identifier corresponding to the first STA device.

24. A communication apparatus, comprising:
a determination unit configured to determine a first message frame, wherein the first message frame comprises first bandwidth information, the first message frame is configured to indicate a first station (STA) device to send a second message frame based on the first bandwidth information, and the second message frame is configured for acknowledging an Aggregate Physical Layer Protocol Data Unit (A-PPDU); and
a first communication unit configured to send the first message frame.

25. A communication apparatus, comprising:
a second communication unit configured to receive a first message frame, wherein the first message frame comprises first bandwidth information, the first message frame is configured to indicate a first STA device to send a second message frame based on the first bandwidth information, and the second message frame is configured for acknowledging an A-PPDU.

26. An access point (AP) device, comprising a memory, a processor, and a computer program stored on the memory and executable by the processor, wherein the processor is configured to execute the computer program to perform the method according to any of claims 1 to 11.

27. A station (STA) device, comprising a memory, a processor, and a computer program stored on the memory and executable by the processor, wherein the processor is configured to execute the computer program to perform the method according to any of claims 12 to 23.

28. A computer-readable storage medium having a computer program stored thereon, which when executed by a processor, causes the method according to any of claims 1 to 23 to be performed.
